# FASCICULE DE BREVET EUROPEEN

(11) **EP 3 969 355 B1**
(45) Date de publication et mention de la délivrance du brevet: **28.06.2023**
(21) Numéro de dépôt: 20735014.1
(22) Date de dépôt: 12.05.2020
(51) Int. Cl.: B62D 25/20

(54) **ETANCHÉISATION ENTRE UN TUNNEL ET UNE TRAVERSE CONSITUTIFS D'UN SOUBASSEMENT D'UNE CAISSE D'UN VÉHICULE AUTOMOBILE**
ABDICHTUNG ZWISCHEN EINEM TUNNEL UND EINEM QUERTRÄGER EINES UNTERBAUS EINES KRAFTFAHRZEUGES
SEALING BETWEEN A TUNNEL AND A CROSSBEAM CONSTITUTING AN UNDERBODY OF A MOTOR VEHICLE

(30) Priorité: 16.05.2019 FR 1905135
(43) Date de publication de la demande: 23.03.2022
(73) Titulaire: PSA Automobiles SA, 78300 Poissy (FR)
(72) Inventeur: SEVRIN, Alexandre, 91400 ORSAY (FR)
(86) Numéro de dépôt international: PCT/FR2020/000168
(87) Numéro de publication internationale: WO 2020/229742

(56) Documents cités:
- EP-A1- 3 115 281
- DE-A1- 2 923 874
- DE-A1-102014 207 745
- US-A1- 2005 189 791

## Description

### Domaine technique de l'invention

La présente invention relève du domaine de l'assemblage étanche entre eux d'éléments de carrosserie d'un véhicule automobile. Plus particulièrement, l'invention concerne l'interposition d'organes d'étanchéité entre une traverse et un tunnel constitutifs d'un soubassement d'une caisse d'un véhicule automobile.

### Art antérieur

Dans le domaine automobile, il est courant que deux éléments de carrosserie soient assemblés l'un à l'autre par emboîtement monodirectionnel puis fixés l'un à l'autre, tel que par soudage via des points de soudures électriques par exemple. Il est aussi fréquent qu'un ou plusieurs organes d'étanchéité soient interposés entre les éléments de carrosserie pour éviter une infiltration d'humidité entre eux et/ou pour conforter leur fixation l'un à l'autre par collage via le ou les organes d'étanchéité.

Tel est le cas concernant l'assemblage entre un tunnel et une traverse constitutifs d'un soubassement d'une caisse d'un véhicule automobile. Le tunnel et la traverse s'étendent typiquement suivant des directions respectives qui sont perpendiculaires entre elles suivant les directions d'extension de la caisse, longitudinalement pour le tunnel et transversalement pour la traverse. Le tunnel est couramment formé d'un profilé en U à bords rabattus ménageant des parois latérales du tunnel et une assise de prise d'appui vertical du tunnel contre une semelle ménagée par la traverse.

Selon des modalités d'assemblage avantageusement simples entre le tunnel et la traverse, la traverse est pourvue longitudinalement d'un organe d'emboîtement de forme complémentaire à celle du tunnel.

Le tunnel et la traverse sont verticalement emboîtés l'un à l'autre, par coiffage de l'organe d'emboîtement dont les parois latérales sont disposées dans le volume intérieur du tunnel. Les faces intérieures des parois latérales du tunnel portent contre les faces extérieures des parois latérales de l'organe d'emboîtement, et les assises du tunnel portent verticalement contre les semelles qui sont ménagées par l'organe d'emboîtement.

Il se pose cependant des problèmes et des difficultés à surmonter concernant la mise en interposition d'un organe d'étanchéité entre le tunnel et la traverse. Les choix relatifs à la structure, à l'emplacement et/ou à l'extension de l'organe d'étanchéité sont notamment conditionnés à diverses contraintes qui restreignent les solutions possibles d'interposition de l'organe d'étanchéité entre le tunnel et la traverse.

Parmi ces contraintes, il est à éviter un risque de détérioration de l'organe d'étanchéité lors de sa mise en place et/ou lors de l'assemblage entre eux du tunnel et de la traverse. Par exemple, il est à éviter de placer l'organe d'étanchéité à proximité des zones de fixation du tunnel et de la traverse entre eux et/ou à d'autres éléments de carrosserie. Il est à relever que les modalités de fixation entre eux des composants de la caisse sont définies prioritairement compte tenu des efforts que doit supporter la caisse, y compris en cas de choc. Par exemple encore, la mise en compression de l'organe d'étanchéité entre le tunnel et la traverse doit être suffisante pour procurer l'étanchéité à obtenir entre eux, et/ou inversement ne doit pas être excessive pour éviter sa détérioration par suite de sa mise en compression entre le tunnel et la traverse lors de leur emboîtement.

Il est aussi à tenir compte du processus de montage sur la caisse de divers éléments de carrosserie lors du ferrage de la caisse, qui environnent la zone de jonction entre le tunnel et la traverse et qui peuvent faire obstacle à la mise en interposition de l'organe d'étanchéité entre le tunnel et la traverse. Sur une chaîne de montage des composants d'un véhicule, il est fréquent qu'une opération de mise en place d'un organe d'étanchéité ne soit pas prioritaire et/ou puisse être délicate à réaliser, en raison d'autres opérations préalablement effectuées sur la chaîne de montage.

Il est notamment à prendre en compte les positionnements relatifs, les assemblages et/ou les fixations entre eux de divers éléments de carrosserie du véhicule environnant la zone de jonction entre le tunnel et la traverse, ainsi que les passages nécessaires pour les divers outillages équipant la chaîne de montage. Une telle contrainte rend par exemple difficile voire impossible de déposer un cordon d'étanchéité sur un élément de carrosserie postérieurement au ferrage de la caisse, ou de pulvériser un cordon d'étanchéité entre deux éléments de carrosserie, en l'espèce entre le tunnel et la traverse, au cours d'une opération finale de revêtement des éléments de carrosserie assemblés du véhicule.

En outre, les modalités d'emboîtement vertical du tunnel et de la traverse peuvent détériorer l'organe d'étanchéité prévu d'être interposé entre eux, notamment dans le cas où l'organe d'étanchéité est choisi formé d'un cordon de mastic. Il est alors courant de réaliser l'étanchéité entre le tunnel et la traverse via des inserts gonflants, mais ceux-ci présentent l'inconvénient d'être coûteux. Une extension verticale d'un cordon d'étanchéité déposé en interposition entre les parois latérales du tunnel et de l'organe d'emboîtement dont la traverse est pourvue, tend alors à provoquer un refoulement du cordon d'étanchéité préalablement déposé et donc à provoquer sa détérioration, y compris sa potentielle rupture.

Une solution pour éviter un tel refoulement du cordon d'étanchéité consiste à utiliser des brides latérales de fixation du tunnel et de la traverse entre eux, ce qui évite leur assemblage par emboîtement vertical tel qu'il ressort par exemple des documents

DE 29 23 874 A1 et US2019009833-A1 (HONDA MOTOR CO Ltd). Une telle solution est cependant coûteuse avec pour conséquence d'accroître le coût d'obtention du véhicule.

### Présentation de l'invention

Dans ce contexte, la présente invention a pour objet un ensemble d'éléments de carrosserie d'un soubassement d'une caisse d'un véhicule automobile, comprenant un tunnel et une traverse assemblés entre eux par emboîtement vertical, au moins un organe d'étanchéité étant interposé entre eux.

Un but de l'invention est de surmonter les difficultés et les contraintes préalablement exposées, isolément ou en combinaison. Il est plus spécifiquement visé de proposer une solution pour procurer une étanchéité entre le tunnel et la traverse via au moins un cordon d'étanchéité.

Un tel but s'inscrit notamment sous contrainte d'une recherche de réduction des coûts liés à l'obtention d'une étanchéité entre le tunnel et la traverse, dans le contexte d'une concurrence économique sévère dans le domaine automobile qui peut rendre rédhibitoire une solution potentielle en raison des coûts induits.

Les buts visés par la présente invention sont atteints par application des dispositions qui suivent.

Un ensemble d'éléments de carrosserie d'un soubassement d'une caisse d'un véhicule automobile conforme à l'invention, comprend un tunnel longitudinal et une traverse assemblés entre eux par emboîtement vertical. Le tunnel présente un profil en U à angle ouvert ménageant des parois latérales du tunnel qui sont sensiblement inclinées par rapport à la direction d'emboîtement verticale entre le tunnel et la traverse. Le tunnel coiffe un organe d'emboîtement longitudinalement étendu dont est pourvue la traverse et qui présente un profil de forme complémentaire au profil du tunnel. L'organe d'emboîtement comprend des parois latérales contre lesquelles les parois latérales du tunnel sont appliquées. Au moins un organe d'étanchéité est interposé entre le tunnel et la traverse.

Dans ce contexte, l'invention est reconnaissable en ce que le dit au moins un organe d'étanchéité comprend des cordons d'étanchéité qui s'étendent en interposition respectivement entre les parois latérales du tunnel et les parois latérales de l'organe d'emboîtement qui sont en vis-à-vis l'une sur l'autre. Les cordons sont respectivement logés à l'intérieur de réserves ménagées entre lesdites parois latérales en vis-à-vis du tunnel et de l'organe d'emboîtement. Des premiers débouchés évasés des réserves vers l'intérieur du tunnel ménagent des capacités à l'intérieur desquelles un fluage des cordons est mis en compression en fin de course d'emboîtement vertical entre eux du tunnel et de l'organe d'emboîtement.

Les notions longitudinal, vertical et transversal tel que relevant de l'extension d'une traverse, sont classiquement considérées au regard des directions d'extension de la caisse communément appliquées dans le domaine automobile. Il est aussi compris qu'au moins un cordon d'étanchéité est interposé entre chaque jeu de dites parois latérales en vis-à-vis comprenant une paroi latérale du tunnel et une paroi latérale de l'organe d'emboîtement appliquées l'une contre l'autre.

Par suite de l'emboîtement entre eux du tunnel et de la traverse, via l'organe d'emboîtement dont elle est pourvue, un fluage des cordons est autorisé depuis l'intérieur des réserves au moins vers les dites capacités. La matière issue du fluage des cordons se trouvent comprimée à l'intérieur des capacités en fin de course d'emboîtement entre le tunnel et la traverse. Ceci permet finalement de réaliser une étanchéité entre les parois latérales du tunnel et de la traverse via des cordons d'étanchéité, tel que notamment des cordons de mastic, en évitant de les détériorer par suite de l'emboîtement entre le tunnel et la traverse. Les cordons d'étanchéité peuvent aussi être facilement déposés sur le tunnel ou sur l'organe d'emboîtement de la traverse dans l'attente de leur assemblage par emboîtement. Selon une forme de réalisation, l'écart entre les parois latérales en vis-à-vis du tunnel et de l'organe d'emboîtement ménageant entre elles les réserves, sont constants. Lesdites capacités sont ménagées par un rabat des parois latérales de l'organe d'emboîtement vers le volume intérieur du tunnel.

Selon une forme de réalisation, les réserves sont au moins en partie ménagées par des alvéoles formées dans les parois latérales du tunnel hors desquelles émergent les cordons suivant leur épaisseur.

Les alvéoles procurent une protection des cordons à l'encontre de leur refoulement lors de l'emboîtement du tunnel et de l'organe d'emboîtement entre eux. De telles alvéoles sont notamment formées par emboutissage des parois latérales du tunnel. Les cordons considérés suivant leur épaisseur s'étendent entre les parois latérales du tunnel et de l'organe d'emboîtement, l'extension verticale des alvéoles se prolongeant en étant supérieure à l'extension verticale des parois latérales de l'organe d'emboîtement.

Selon une forme de réalisation les profils du tunnel et de l'organe d'emboîtement étant en U à bords rabattus, les parois latérales du tunnel sont chacune prolongées par une assise de prise d'appui vertical du tunnel contre une semelle ménagée par l'organe d'emboîtement. Il est compris que les assises et les semelles s'étendent suivant des plans qui sont orientés perpendiculairement à la direction d'emboîtement verticale du tunnel et de la traverse entre eux.

Selon une forme de réalisation, les réserves s'étendent entre les assises et les semelles. Les cordons se prolongent à l'intérieur des réserves en interposition entre les assises et les semelles depuis les parois latérales du tunnel et de l'organe d'emboîtement.

Selon une forme de réalisation, l'écart vertical entre les assises et les semelles délimitant les réserves, est maintenu constant via des plots dont sont pourvues indifféremment les assises et/ou les semelles et qui sont répartis de part et d'autre des cordons. De tels plots forment des entretoises de séparation verticale entre les assises et les semelles, en maintenant entre elles la continuité des réserves depuis les parois latérales du tunnel et de l'organe d'emboîtement. Les réserves présentent une section constante, la section des réserves étant considérée au regard de l'épaisseur des cordons.

Selon une forme de réalisation, un deuxième débouché des réserves est formé entre les assises et les semelles en ménageant des passages à travers lesquels un fluage des cordons est évacué hors des réserves par suite de l'emboîtement entre eux du tunnel et de l'organe d'emboîtement. Un tel fluage autorisé des cordons permet de les préserver d'une détérioration lors de l'emboîtement du tunnel et de l'organe d'emboîtement entre eux.

Selon une forme de réalisation, les parois latérales du tunnel et de l'organe d'emboîtement sont inclinées d'un angle compris entre 5° (cinq degrés) et 15° par rapport à la direction d'emboîtement verticale du tunnel et l'organe d'emboîtement entre eux. Autrement dit, les parois latérales du tunnel et de l'organe d'emboîtement sont inclinées d'un angle compris entre 95° et 105° par rapport aux plans d'extension des semelles et des assises.

Selon une forme de réalisation, la profondeur des réserves est comprise entre 0,4 et 0,5 fois l'épaisseur des cordons considérée hors compression. Il est compris que l'épaisseur des cordons est prise en considération en phase de dépôt sur le tunnel ou sur l'organe d'emboîtement, préalablement à leur mise en compression entre les parois latérales du tunnel et de l'organe d'emboîtement. La profondeur des réserves, ou autrement dit leur section, est considérée suivant l'épaisseur des cordons entre les parois latérales du tunnel et de l'organe d'emboîtement. A titre indicatif, pour un cordon d'une épaisseur de 4 mm (quatre millimètres), la profondeur des réserves est comprise entre 1,6 mm et 2 mm.

Selon une forme de réalisation, un repérage de l'extension au moins en partie des cordons en interposition entre le tunnel et l'organe d'emboîtement, est formé d'un marquage ménagé indifféremment sur l'organe d'emboîtement ou sur le tunnel à leur face recevant par dépôt les cordons. Un tel repérage permet à un opérateur d'être précisément guidé lors de la pose des cordons sur le tunnel ou sur l'organe d'emboîtement préalablement à leur emboîtement entre eux.

### Présentation des figures

L'invention sera mieux comprise à la lecture de la description détaillée qui suit d'un exemple de réalisation de la présente invention, en relation avec les figures suivantes :
[Fig. 1] La figure 1 est une illustration partielle en perspective de dessous, d'un tunnel représenté en écorché suivant son extension longitudinale et d'une traverse assemblés entre eux par emboîtement vertical.
[Fig. 2] La figure 2 est une illustration partielle en perspective vue suivant l'extension longitudinale du tunnel représenté en écorché, qui est assemblé à la traverse tel que représenté sur la figure 1.
[Fig. 3] La figure 3 est une illustration partielle en perspective de dessous du tunnel et de la traverse assemblés tel que représenté sur les figures 1 et 2.
[Fig. 4] La figure 4 est un schéma illustrant de profil transversal les modalités d'interposition d'un cordon d'étanchéité entre le tunnel et la traverse assemblés tel que représenté sur les figures 1 à 3.

### Description détaillée de l'invention

Les figures et leurs descriptions détaillées non limitatives, exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite. Sur les figures, un ensemble d'éléments de carrosserie constitutifs d'un soubassement de véhicule automobile, comprend un tunnel 1 et une traverse 2 assemblés entre eux par emboîtement vertical V1. Pour définir l'invention, il est utilisé un repère orthonormé classiquement utilisé dans le domaine automobile comprenant une direction longitudinale L1, une direction transversale T1 et une direction verticale V1 en correspondance avec les directions d'extension d'une caisse de véhicule automobile communément utilisées pour la définir.

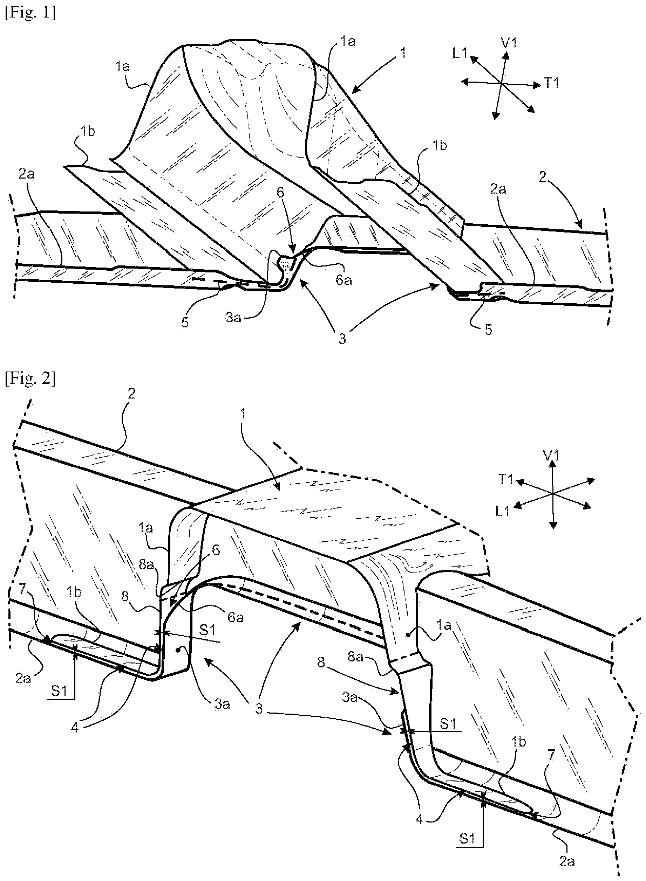

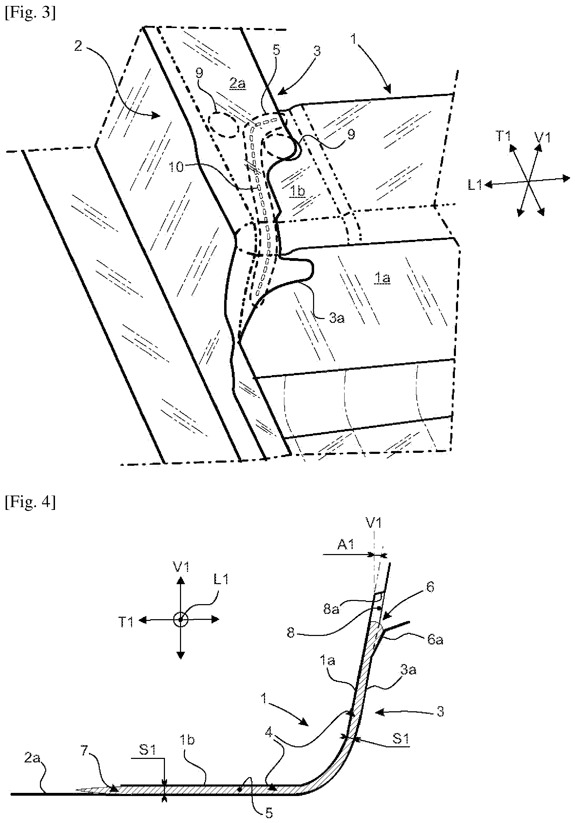

Tel que classiquement et visible sur les figures 1 et 2, le tunnel 1 s'étend longitudinalement L1 en présentant un profil transversal T1 conformé en U, tel que plus spécifiquement conformé en U ouvert à bords rabattus. Le tunnel 1 comprend des parois latérales 1a orientées chacune suivant un plan longitudinal L1 et sensiblement vertical V1 d'extension. Les parois latérales 1a du tunnel 1 sont ménagées par les ailes du U en étant légèrement inclinées d'un angle A1 (figure 4) de l'ordre de 10° (10 degrés) par rapport à la direction verticale V1 suivant laquelle le tunnel 1 est emboîté avec la traverse 2.

Chacune des parois latérales 1a du tunnel 1 est prolongée par une assise 1b qui s'étend suivant un plan transversal T1 et longitudinal L1 en étant orientée vers l'extérieur du tunnel 1. Les assises 1b sont notamment formées par lesdits rabats, d'extension transversale T1, qui sont ménagés par le profil transversal en U du profilé à partir duquel est formé le tunnel 1.

La traverse 2 s'étend transversalement T1 et verticalement V1 en étant munie d'une semelle 2a participant de la formation d'un organe d'emboîtement 3 pour son assemblage avec le tunnel 1. L'organe d'emboîtement 3 est issu de la matière de la traverse 2, en étant notamment formé par découpage et pliage d'une tôle constitutive de la traverse 2.

L'organe d'emboîtement 3 présente une extension longitudinale L1 et un profil transversal T1 en U ouvert à bords rabattus de forme complémentaire au profil transversal T1 du tunnel 1, pour procurer l'emboîtement vertical V1 entre la traverse 2 et le tunnel 1. A l'instar du tunnel 1, l'organe d'emboîtement 3 présente des parois latérales 3a contre lesquelles les parois latérales 1a du tunnel 1 prennent appui suivant la direction transversale T1. L'organe d'emboîtement 3 présente aussi des semelles 2a contre lesquelles les assises 1b du tunnel 1 prennent verticalement appui et qui sont notamment formées par la semelle 2a que comporte la traverse 2 le long de son extension transversale T1.

Le tunnel 1 coiffe l'organe d'emboîtement 3, les parois latérales 1a du tunnel 1 s'étendant significativement verticalement V1 au dessus des parois latérales 3a de l'organe d'emboîtement 3. Les parois latérales 1a du tunnel 1 respectivement disposées en vis-à-vis sur les parois latérales 3a de l'organe d'emboîtement 3 prennent appui via leur face intérieure contre la face extérieure des parois latérales 3a de l'organe d'emboîtement 3. Les notions intérieure et extérieure sont considérées au regard du volume intérieur délimité par le tunnel 1, notamment entre ses parois latérales 1a.

Tel que visible sur la figure 2 et la figure 4, des réserves 4 de réception d'un cordon 5 d'étanchéité qui leur sont affecté sont ménagées entre le tunnel 1 et l'organe d'emboîtement 3. Les réserves 4 sont respectivement ménagées entre les parois latérales 1a, 3a en vis-à-vis du tunnel 1 et de l'organe d'emboîtement 3 et se prolongent en continu entre les assises 1b et les semelles 2a. La section S1 des réserves 4, considérée suivant l'épaisseur des cordons 5 et déterminée par l'écart S1 entre les parois 1a, 1b du tunnel 1 et les parois 3a, 2a de l'organe d'emboîtement 3 en vis-à-vis sur les parois1a, 1b du tunnel 1, est constante en étant de l'ordre de 1,8 mm pour un cordon 5 d'une épaisseur de l'ordre de 4 mm. Un premier débouché des réserves 4 vers l'intérieur du tunnel 1 présente un évasement ménageant une capacité 6 à l'intérieur de laquelle un fluage des cordons 5 hors des réserves 4 est comprimé en fin d'emboîtement vertical V1 du tunnel 1 et de l'organe d'emboîtement 3 entre eux. Les capacités 6 sont ménagées entre les parois latérales 1a du tunnel 1 en vis-à-vis des parois latérales 3a de l'organe d'emboîtement 3. L'évasement du premier débouché des réserves 4 est ménagé via un rabat 6a des parois latérales 3a de l'organe d'emboîtement 3 vers le volume intérieur du tunnel 1. Un deuxième débouché 7 des réserves 4 vers l'extérieur est ménagé entre les assises 1b et les semelles 2a, en délimitant entre elles un passage à travers lequel un fluage des cordons 5 peut être évacué hors des réserves 4 lors de l'emboîtement entre le tunnel 1 et la traverse 2.

Les parois latérales 1a du tunnel 1 comportent chacune une alvéole 8 formée par emboutissage d'une tôle constitutive du tunnel 1. Les alvéoles 8 logent les cordons 5 interposés entre les parois latérales 1a, 3a du tunnel 1 et de l'organe d'emboîtement 3. Les alvéoles 8 sont ouvertes à leur base sur les volumes des réserves 4 s'étendant entre les semelles 2a et les assises 1b. Le fond 8a des alvéoles 8 est situé verticalement V1 à l'opposé des ouvertures des alvéoles 8 sur les volumes des réserves 4, en étant disposé en surplomb desdites capacités 6 ménagées au premier débouché des réserves 4.

Sur la figure 3, des entretoises formées par des plots 9 d'extension verticale V1 sont ménagées entre les semelles 2a et les assises 1b pour maintenir un écart S1 constant entre elles. De tels plots 9 sont notamment formés par emboutissage des tôles constitutives du tunnel 1 et/ou de l'organe d'emboîtement 3, en étant répartis de part et d'autre de l'extension des cordons 5.

Par ailleurs, les cordons 5 sont déposés par un opérateur sur une pièce porteuse constituée du tunnel 1 ou de la traverse 2 via l'organe d'organe d'emboîtement 3, préalablement à leur assemblage l'un à l'autre par emboîtement du tunnel 1 et de l'organe d'emboîtement 3 entre eux. L'opération de dépôt des cordons 5 est notamment réalisée préalablement ou au cours du processus de ferrage de la caisse.

Pour guider l'opérateur, un marquage 10 est ménagé sur la face de la pièce porteuse (tunnel 1 ou organe d'emboîtement 3) qui est prévue de recevoir le dépôt des cordons 5. Un tel marquage 10 fournit à l'opérateur un repérage précis de la position des cordons 5 à déposer sur la pièce porteuse 1 ou 3.

## Revendications

1. Ensemble d'éléments de carrosserie d'un soubassement d'une caisse d'un véhicule automobile comprenant un tunnel (1) longitudinal et une traverse (2) assemblés entre eux par emboîtement vertical, le tunnel (1) présentant un profil en U à angle ouvert ménageant des parois latérales (1a) du tunnel (1) qui sont sensiblement inclinées par rapport à la direction d'emboîtement verticale entre le tunnel (1) et la traverse (2), le tunnel (1) coiffant un organe d'emboîtement (3) longitudinalement étendu dont est pourvue la traverse (2) et qui présente un profil de forme complémentaire au profil du tunnel (1), l'organe d'emboîtement (3) comprenant des parois latérales (3a) contre lesquelles les parois latérales (1a) du tunnel (1) sont appliquées, au moins un organe d'étanchéité étant interposé entre le tunnel (1) et la traverse (2), **caractérisé en ce que** le dit au moins un organe d'étanchéité comprend des cordons (5) d'étanchéité qui s'étendent en interposition respectivement entre les parois latérales (1a) du tunnel (1) et les parois latérales (3a) de l'organe d'emboîtement (3) qui sont en vis-à-vis l'une sur l'autre, les cordons (5) étant respectivement logés à l'intérieur de réserves (4) ménagées entre lesdites parois latérales (1a, 3a) en vis-à-vis du tunnel (1) et de l'organe d'emboîtement (3), et **en ce que** des premiers débouchés évasés des réserves (4) vers l'intérieur du tunnel (1) ménagent des capacités (6) à l'intérieur desquelles un fluage des cordons (5) est mis en compression en fin de course d'emboîtement vertical entre eux du tunnel (1) et de l'organe d'emboîtement (3).

2. Ensemble d'éléments de carrosserie selon la revendication 1, **caractérisé en ce que** l'écart (S1) entre les parois latérales (1a, 3a) en vis-à-vis du tunnel (1) et de l'organe d'emboîtement (3) ménageant entre elles les réserves (4) sont constants, et **en ce que** lesdites capacités (6) sont ménagées par un rabat (6a) des parois latérales (3a) de l'organe d'emboîtement (3) vers le volume intérieur du tunnel (1).

3. Ensemble d'éléments de carrosserie selon l'une quelconque des revendications 1 et 2, **caractérisé en ce que** les réserves sont au moins en partie ménagées par des alvéoles (8) formées dans les parois latérales (1a) du tunnel (1) hors desquelles émergent les cordons (5) suivant leur épaisseur.

4. Ensemble d'éléments de carrosserie selon l'une quelconque des revendications 1 à 3, **caractérisé en ce que** les profils du tunnel (1) et de l'organe d'emboîtement (3) étant en U à bords rabattus, les parois latérales (1a) du tunnel (1) sont chacune prolongées par une assise (1b) de prise d'appui vertical du tunnel (1) contre une semelle (2a) ménagée par l'organe d'emboîtement (3).

5. Ensemble d'éléments de carrosserie selon la revendication 4, **caractérisé en ce que** les réserves (4) s'étendent entre les assises (1b) et les semelles (2a), les cordons (5) se prolongeant à l'intérieur des réserves (4) en interposition entre les assises (1b) et les semelles (2a) depuis les parois latérales (1a, 3a) du tunnel (1) et de l'organe d'emboîtement (3).

6. Ensemble d'éléments de carrosserie selon la revendication 5, **caractérisé en ce que** l'écart vertical (V1) entre les assises (1b) et les semelles (2a) délimitant les réserves (4), est maintenu constant via des plots (9) dont sont pourvues indifféremment les assises (1b) et/ou les semelles (2a) et qui sont répartis de part et d'autre des cordons (5).

7. Ensemble d'éléments de carrosserie selon l'une quelconque des revendications 5 et 6, **caractérisé en ce qu'**un deuxième débouché des réserves (4) est formé entre les assises (1b) et les semelles (2a) en ménageant des passages à travers lesquels un fluage des cordons (5) est évacué hors des réserves (4) par suite de l'emboîtement entre eux du tunnel (1) et de l'organe d'emboîtement (3).

8. Ensemble d'éléments de carrosserie selon l'une quelconque des revendications 1 à 7, **caractérisé en ce que** les parois latérales (1a, 3a) du tunnel (1) et de l'organe d'emboîtement (3) sont inclinées d'un angle compris entre 5° et 15° par rapport à la direction d'emboîtement verticale du tunnel (1) et l'organe d'emboîtement (3) entre eux.

9. Ensemble d'éléments de carrosserie selon l'une quelconque des revendications 1 à 8, **caractérisé en ce que** la profondeur des réserves (4) est comprise entre 0,4 et 0,5 fois l'épaisseur des cordons (5) considérée hors compression.

10. Ensemble d'éléments de carrosserie selon l'une quelconque des revendications 1 à 8, **caractérisé en ce qu'**un repérage de l'extension au moins en partie des cordons (5) en interposition entre le tunnel (1) et l'organe d'emboîtement (3) est formé d'un marquage (10) ménagé indifféremment sur l'organe d'emboîtement (3) ou sur le tunnel (1) à leur face recevant par dépôt les cordons (5).

## Patentansprüche

1. Karosserieteil eines Unterteils eines Kraftfahrzeugs mit einem Längstunnel (1) und einem Querträger (2), die miteinander durch vertikales Aufstecken verbunden sind, wobei der Tunnel (1) ein U-förmiges Profil mit offenem Winkel aufweist, das Seitenwände (1a) des Tunnels (1) umfasst, die im Wesentlichen geneigt zur vertikalen Aufsteckrichtung zwischen dem Tunnel (1) und Der Querträger (2), wobei der Tunnel (1) ein längliches, längliches Steckelement (3) mit dem Querträger (2) überbrückt und ein Profil aufweist, das dem Profil des Tunnels (1) komplementär ist, wobei das Steckelement (3) Seitenwände (3a) aufweist, an denen die Seitenwände (1a) des Tunnels (1) anliegen, wobei zwischen dem Tunnel (1) wenigstens ein Dichtelement angeordnet ist Querträger (2), **dadurch gekennzeichnet, dass** das mindestens eine Dichtelement Dichtleisten (5) aufweist, die sich jeweils zwischen den Seitenwänden (1a) des Tunnels (1) und den einander gegenüberliegenden Seitenwänden (3a) des Steckelements (3) erstrecken, wobei die Schnüre (5) jeweils aufgenommen sind Innerhalb von Reserven (4), die zwischen den dem Tunnel (1) und dem Steckelement (3) gegenüberliegenden Seitenwänden (1a, 3a) vorgesehen sind, und dass sich nach innen erweiternde erste Öffnungen der Reserven (4) Kapazitäten (6) bilden, in denen ein Kriechen der Schnüre (5) beendet wird Vertikal-Einsteckhub des Tunnels (1) und des Einsteckorgans (3).

2. Karosserieteil-Anordnung nach Anspruch 1, **dadurch gekennzeichnet, dass** der Abstand (S1) zwischen den Seitenwänden (1a, 3a) gegenüber dem Tunnel (1) und dem die Reserven (4) zwischen sich bildenden Steckelement (3) konstant ist und dass die Kapazitäten (6) durch eine Lasche (6a) der Seitenwände (6) gebildet sind 3a) des Einsteckorgans (3) zum Innenraum des Tunnels (1) hin.

3. Karosserieteil-Anordnung nach einem der Ansprüche 1 und 2, **dadurch gekennzeichnet, dass** die Reversen zumindest teilweise durch Vertiefungen (8) gebildet sind, die in den Seitenwänden (1a) des Tunnels (1) ausgebildet sind, aus denen die Stränge (5) in ihrer Dicke hervorstehen.

4. Karosserieteil-Anordnung nach einem der Ansprüche 1 bis 3, **dadurch gekennzeichnet, dass** die Profile des Tunnels (1) und des Einsteckgliedes (3) U-förmig mit umgebogenen Rändern sind, wobei die Seitenwände (1a) des Tunnels (1) jeweils durch eine Sitzfläche (1b) zur vertikalen Abstützung des Tunnels (1) gegen eine Sohle (2a) verlängert sind Steckorgan (3).

5. Karosserieteil-Anordnung nach Anspruch 4, **dadurch gekennzeichnet, dass** sich die Reserven (4) zwischen den Sitzflächen (1b) und den Sohlen (2a) erstrecken, wobei sich die Schnüre (5) innerhalb der Lagerflächen (4) in Zwischenlage zwischen den Sitzflächen (1b) und den Sohlen (2a) von den Seitenwänden (1a, 3a) des Tunnels (1) und von das Steckelement (3).

6. Karosserieteil-Anordnung nach Anspruch 5, **dadurch gekennzeichnet, dass** der vertikale Abstand (V1) zwischen den die Reserven (4) begrenzenden Stützen (1b) und Sohlen (2a) über Klötze (9) konstant gehalten wird, mit denen die Klötze (1b) und/oder Sohlen (2a) gleich versehen sind und die beiderseits der Klauen verteilt sind (5).

7. Karosserieteil-Anordnung nach einem der Ansprüche 5 und 6, **dadurch gekennzeichnet, dass** zwischen den Sitzflächen (1b) und den Sohlen (2a) eine zweite Öffnung der Reservate (4) gebildet ist, durch die Durchgänge vermieden werden, durch die ein Kriechen der Schnüre (5) aus den Reservaten (4) nach dem Ineinander greifen des Tunnels (1) und des Steckorgan (3).

8. Karosserieteil-Anordnung nach einem der Ansprüche 1 bis 7, **dadurch gekennzeichnet, dass** die Seitenwände (1a, 3a) des Tunnels (1) und des Einsteckorgans (3) um einen Winkel zwischen 5° und 15° zur vertikalen Einsteckrichtung des Tunnels (1) und des dazwischen befindlichen Einsteckorgans (3) geneigt sind.

9. Karosserieteil-Anordnung nach einem der Ansprüche 1 bis 8, **dadurch gekennzeichnet, dass** die Tiefe der Reservate (4) zwischen dem 0,4- und 0,5-fachen der Dicke der Stränge (5) liegt, die ohne Kompression betrachtet werden.

10. Karosserieteil-Anordnung nach einem der Ansprüche 1 bis 8, **dadurch gekennzeichnet, dass** eine Erfassung der Erstreckung der Schnüre (5) zumindest teilweise zwischen dem Tunnel (1) und dem Einsteckelement (3) durch eine Markierung (10) gebildet ist, die auf dem Einsteckelement (3) oder auf dem Einsteckelement (3) gleichmäßig angeordnet ist Tunnel (1) an ihrer Seite, die die Schnüren (5) ablagert.

## Claims

1. A set of body elements of a body base of a motor vehicle body comprising a tunnel (1) longitudinal and a cross (2) assembled together by means of a vertical socket, the tunnel (1) having an open-angle U profile with side walls (1a) of the tunnel (1) which are sloped substantially in relation to the direction of vertical interlocking between the tunnel (1) and the tunnel (2), the tunnel (1) topping an interlocking device (3) which is lengthwise fitted to the crossing (2) and which has a profile of form complementary to the profile of the tunnel (1), the interlocking device (3) which includes side walls (3a) against which the side walls (1a) of the tunnel (1) are applied, at least one sealing device being interposed between the tunnel (1) and the cross (2), characterized as one or more of the sealant parts, includes (5) watertight cords that extend in interposition between the side walls (1a) of the tunnel (1) and the side walls (3a) of the sealant (3) that are opposite each other, the cords (5) being lodged respectively within reserves (4) between the said side walls (1a, 3a) in relation to the tunnel (1) and the interlocking device (3), and in so far as the first lost outlets of the reserves (4) within the tunnel (1) create capacities (6) within which a creep of the cords (5) is put into compression at the end of the run vertical interlocking of the tunnel (1) and the interlocking device (3).

2. Body set according to Claim 1, characterized as the gap (S1) between the side walls (1a, 3a) in relation to the tunnel (1) and the interlocking body (3) with reserves (4) is constant, and as such capacities (6) are provided by a flap (6a) of the side walls (3a) (a) the interlocking device (3) to the inner volume of the tunnel (1).

3. Set of body parts according to any of Claims 1 and 2, **characterized in that** the spills are at least partly spared by alveoles (8) formed in the side walls (1a) of the tunnel (1) from which the cords (5) emerge according to their thickness.

4. Set of bodywork elements according to any of claims 1 to 3, characterized as the profiles of the tunnel (1) and of the interlocking device (3) being in U with flattened edges, the side walls (1a) of the tunnel (1) are each extended by a seat (1b) of the vertical support socket of the tunnel (1) against a single sole (2a) by the interlocking device (3).

5. Body set according to Claim 4, characterized as reserves (4) extend between base (1b) and sole (2a), cords (5) extend within reserve (4) in interposition between base (1b) and sole (2a) from the side walls (1a, 3a) of tunnel (1) and of the interlocking device (3).

6. Body set according to Claim 5, characterized as the vertical gap (V1) between the bases (1b) and the soles (2a) delimiting the reserves (4), is maintained constant through plots (9) which are provided indifferently with the bases (1b) and/or the soles (2a) and which are distributed on both sides of the cords (5).

7. Set of body elements according to any of Claims 5 and 6, **characterized by** the fact that a second outlet of reserves (4) is formed between the bases (1b) and the soles (2a) by maintaining passages through which a creep of cords (5) is evacuated out of reserves (4) as a result of the interlocking between them of the tunnel (1) and the organ nesting (3).

8. Set of body elements according to any of claims 1 to 7, **characterized by** the lateral walls (1a, 3a) of the tunnel (1) and the interlocking device (3) being inclined at an angle between 5° and 15° in relation to the vertical interlocking direction of the tunnel (1) and the interlocking device (3) between them.

9. Set of body elements according to any of claims 1 to 8, characterized as the depth of reserves (4) is between 0.4 and 0.5 times the thickness of cords (5) considered uncompressed.

10. Set of body elements according to any of claims 1 to 8, **characterized in that** a marking (10) of the extension of at least part of the cords (5) in interposition between the tunnel (1) and the interlocking organ (3) is made up of a marking (10) placed indifferently on the interlocking organ (3) or on the tunnel (1) on the face of the cords received by deposit (5).
